# EUROPÄISCHE PATENTSCHRIFT

(11) **EP 0 536 475 B1**
(45) Veröffentlichungstag und Bekanntmachung des Hinweises auf die Patenterteilung: **07.09.1994**
(21) Anmeldenummer: 92110210.9
(22) Anmeldetag: 17.06.1992
(51) Int. Cl.: E02D 31/02

(54) **Dichtungsmatte für den Einsatz im Tiefbau zur Isolation von Erdreich gegen Flüssigkeiten**
Waterimpervious liner to be used in civil engineering for the protection of soil from liquids
Tapis d'étanchéité utilisable en génie civil pour la protection du sol contre des liquides

(30) Priorität: 08.10.1991 DE 9112500 U
(43) Veröffentlichungstag der Anmeldung: 14.04.1993
(73) Patentinhaber: Schreck, Paul, D-97892 Kreuzwertheim (DE)
(72) Erfinder: Schreck, Paul, D-97892 Kreuzwertheim (DE)
(74) Vertreter: Pöhner, Wilfried Anton, Dr.

(56) Entgegenhaltungen:
- EP-A- 0 278 419
- EP-A- 0 445 788
- GB-A- 1 029 513

## Beschreibung

Die Erfindung bezieht sich auf eine Dichtungsmatte für den Einsatz im Tiefbau zur Isolation von Erdreich gegen Flüssigkeiten, insbesondere Wasser, mit zwei äußeren, aus Fasermaterial bestehenden Schichten, zwischen die ein Pulver aus mineralischem Dichtungsmaterial, z.B. Bentonit, eingebracht ist, sowie die beiden Schichten miteinander in Verbindung stehen. Das Dokument EP-A-0 445 788 beschreibt eine derartige Dichtungsmatte.

Auf den verschiedensten Gebieten des Tiefbaues besteht häufig die grundlegende Notwendigkeit der Abdichtung gegen bzw. ein Abhalten von Flüssigkeit an der Ausbreitung im Erdreich und mitunter ein abgegrenztes Bodenvolumen feuchtigkeitmäßig abzuschotten. So ist bei Deponien, kontaminierten Böden und ähnlichem zwingend erforderlich, sicherzustellen, daß kein Sickerwasser und andere Feuchtigkeit ins darunter liegende Erdreich, vor allem ins Grundwasser gelangt, wo es zu gravierenden Verschmutzungen, Unbrauchbarmachung und gar zur Vergiftung des Trinkwassers führen kann. Das Problem der notwendigen Abdichtung stellt sich auch bei Teichen, Biotopen, Kläranlagen, Rückhaltebecken, Kanälen u.ä. Es ist zu diesem Zwecke bekannt, eine Folie in das Erdreich einzubringen, durch die eine völlige Verhinderung der Ausbreitung von Flüssigkeiten und insbesondere von Wasser sichergestellt wird. Neben Kunststoff ist auch geläufig, mineralische Dichtungsmaterialien einzusetzen. Bekannt ist die Verwendung von doppellagigen Vliesen, zwischen denen als mineralisches Dichtungsmaterial Bentonit in Pulverform eingebracht ist. Die Verbindung zwischen den beiden Vliesen erfolgt durch Vernadelung. Das Material Bentonit ist gut handhabbar und entwickelt seine abdichtende Wirkung erst dann, wenn Wasser hinzukommt, durch das es aufquillt und zu einer gallertartiger Substanz wird, wodurch ein für Flüssigkeiten undurchlässiger Film entsteht. Die Verwendung derartiger mit Bentonit als mineralischem Dichtungsmaterial versehener Dichtungsmatten haben im Tiefbau eine weite Verbreitung gefunden.

Allerdings erweist es sich als erheblicher Nachteil, daß die Matten nicht horizontal sondern in der Regel in einem Winkel gegen die Horizontale geneigt, ausgelegt werden. Es entstehen somit tangential zur Oberfläche der Dichtungsmatte wirkende Scherkräfte, die häufig eine relative Verschiebung der beiden Schichten erzeugen, die durch die Tatsache, daß beim Auftreffen von Feuchtigkeit auf das Bentonit eine gallertartige Substanz zwischen den beiden Vliesen gebildet wird und folglich ein entsprechend niedriger Reibungskoeffizient entsteht, erheblich begünstigt wird, so daß nahezu die gesamten Scherkräfte durch die Vernadelung beider Vliese kompensiert werden müssen. Die Kräfte, die hierdurch aufgenommen werden können, sind vergleichsweise gering, so daß die entstehenden Scherkräfte vergleichsweise häufig zu einer Relativbewegung der beiden Vliese führen. Beide Vliese verschieben sich somit gegeneinander.

Hiervon ausgehend hat sich die Erfindung die Schaffung einer Dichtungsmatte zur Aufgabe gemacht, die zur Aufnahme hoher Scherkräfte in der Lage ist.

Gelöst wird diese Aufgabe erfindungsgemäß dadurch, daß zwischen den beiden Schichten ein Aerovlies eingebracht ist, in welches das Pulver aus mineralischem Dichtungsmaterial eingelagert ist, sowie die beiden Schichten mit dem dazwischen befindlichen Aerovlies miteinander vernäht sind.

Die erfindungsgemäße Lehre unterscheidet sich vom Stande der Technik in zwei Merkmalen grundlegend. Zum einen wird zwischen den beiden äußeren ein Vlies oder auch ein Gewirke darstellenden Schichten ein drittes Vlies mit einem hohen Porenanteil pro Volumeneinheit, d. h. ein sogenanntes Aerovlies eingebaut, in welches das mineralische Dichtungsmaterial eingebettet ist. Im Stande der Technik wird demgegenüber das Pulver lose nach Art eines Sandwichelementes in die beiden äußeren Vliesschichten eingebracht. Als weiteres Merkmal werden die beiden äußeren Vliese oder Gewirke und das Aerovlies in ihrer Gesamtheit miteinander vernäht. Beide soeben beschriebene Maßnahmen haben zur Folge, daß eine Relativbewegung der beiden äußeren Vliese oder Gewirke gegeneinander unterbunden wird. Zum einen ist durch die Einbettung des mineralischen Dichtungsmaterials in das Aerovlies weitgehend sichergestellt, daß eine Relativbewegung der sich mit Feuchtigkeit ergebenden gallertartigen Masse durch das Aerovlies wesentlich behindert oder gar vollständig unterbunden wird. Das Vernähen gibt eine wesentlich höhere Festigkeit des gesamten aus den beiden äußeren Vliesen oder Gewirken mit dem Aerovlies und dem darin befindlichen Dichtungsmaterial in ihrer Gesamtheit gebildeten Matte. Das Aerovlies besitzt einen hohen Luftanteil pro Volumenelement, dessen Poren zur Aufnahme des pulverförmigen mineralischen Dichtungspulvers dienen.

Der Einsatz der erfindungsgemäßen Dichtungsmatte geschieht in den bisher bereits bekannten Bereichen, nämlich vornehmlich im Wasserbau, d.h. beim Bau von Kläranlagen, Rückhaltebecken, Staudammbecken, Kanälen, Biotopen, aber auch Kläranlagen, Deponien sowie zur Abisolierung und Abdichtung kontaminierter Böden.

Im Rahmen der Erfindung steht grundsätzlich frei, ob die beiden die äußeren Schichten bildenden faserförmigen Gewebe ein Vlies oder ein Gewirke darstellen. Der Vorteil des letzteren besteht darin, daß er eine gegenüber Vliesen höhere Zugfestigkeit besitzt, so daß dessen Verwendung als bevorzugt anzusehen ist. Grundsätzlich kommen alle mineralischen Dichtungsmaterialien zur Verwendung im Zusammenhang mit der erfindungsgemäßen Dichtungsmatte in Betracht. Auch hier ist wie im Stande der Technik der Einsatz von Bentonitpulver als besonders bevorzugt und wirksam anzusehen. Hervorzuheben ist, daß die Dichtungsmatte nicht nur zum Zurückhalten und Isolieren gegen Wasser sondern für alle Arten von Flüssigkeiten und insbesondere auch von Kohlenwasserstoffen geeignet ist.

Nach dem Einbringen der erfindungsgemäßen Matte in das Erdreich quillt das mineralische Dichtungsmaterial bei Kontakt mit der Feuchtigkeit auf. Um die gewünschte Dichtigkeit weiterhin sicherzustellen, muß dem Quelldruck eine gewisse Kompression entgegengesetzt werden, die auch in feuchtem Zustand die Dichtigkeit der Matte sicherstellt. Zu diesem Zweck wird der Nähfaden zugeführt, daß er an beiden Schichten von außen her anliegt. Hierdurch werden die äußeren Schichten punktuell fixiert, so daß sich die Dichtungsmatte nach der Aufnahme der Feuchtigkeit in den Punkten der Naht überhaupt nicht oder nur geringfügig und in den Nachbarbereichen etwas mehr verbreitern kann und auf diese Weise dem Quelldruck entgegenwirkt und eine hohe Dichtigkeit der aus dem mineralischen Dichtungsmaterial gebildeten Schicht erzeugt wird.

Um dem Quelldruck entgegenzuwirken und eine hinreichend hohe Dichtigkeit des Materiales zu erreichen, dürfen die einzelnen Nähpunkte nicht zu weit auseinander liegen. Andererseits sollten sie jedoch nicht zu eng beieinander gewählt werden, da zum einen wegen fehlender Nachgiebigkeit die Gefahr des Ausreißens besteht und zum anderen die Schädigung der beiden Schichten durch die Naht von solcher Häufigkeit ist, daß sie nicht mehr akzeptiert werden kann. Als bevorzugt ist vorgeschlagen, die Stichlänge, die sich durch den Abstand benachbarter Einstiche bei ein und derselben Naht ergibt, so zu wählen, daß sie etwa der Dicke des mineralischen Dichtungsmaterials im trockenen Zustand entspricht. Bei geringem Abstand besteht zudem die Gefahr, daß das Dichtungsmaterial an der Nahtstelle beiseite gepreßt wird und somit punktuell Undichtigkeit entsteht.

Aufgrund ähnlicher Überlegungen, jedoch unter weiterer Berücksichtigung der Tatsache, daß das Herstellen der Nähte mit erheblichem Arbeitsaufwand verbunden ist, wird in einer Weiterbildung vorgeschlagen, den Abstand zwischen benachbarten Nähzeilen etwa dem drei- bis fünffachen der Stichlänge der Naht zu wählen. Würde man den Abstand wesentlich verringern, müßte ein Vielfaches an Zeit für das Vernähen der Dichtungsmatte aufgewendet werden.

Bei gewissen Anwendungen ist man bestrebt, die Dichtungsmatte unter Vermeidung von Luft unmittelbar an Wänden und Mauerwerk aufzubringen. Für solche Anwendungen ist bevorzugt, eine Dichtungsmatte einzusetzen, bei der eine der beiden Schichten mit einer großen Porenweite versehen ist, so daß das zunächst pulverförmig vorliegende mineralische Dichtungsmaterial nach außen treten kann. Um dies zu verhindern, ist von außen her eine Dichtungsfolie aus wasserlöslichem Material, wie z.B. Zellulose aufgebracht, durch die das Austreten verhindert wird. Tritt nun das mineralische Dichtungsmaterial nach dem Auflegen der Dichtungsmatte auf die Wandfläche mit Feuchtigkeit in Kontakt, wird die Dichtungsfolie zerstört und das pulverförmige und mineralische Dichtungsmaterial geht durch Aufnahme der Feuchtigkeit in einen gallertartigen Zustand über und tritt gleichzeitig teilweise aus der Schicht großer Porenweite aus, so daß im Ergebnis eine unmittelbare Anlage der Dichtungsmatte über eine Schicht aus mit Feuchtigkeit versetztem und deshalb aufgequollenem mineralischem Dichtungsmaterial zur Wand hin gegeben ist. Der Einschluß von Luft oder anderen Gasen ist dann mit Sicherheit unterbunden.

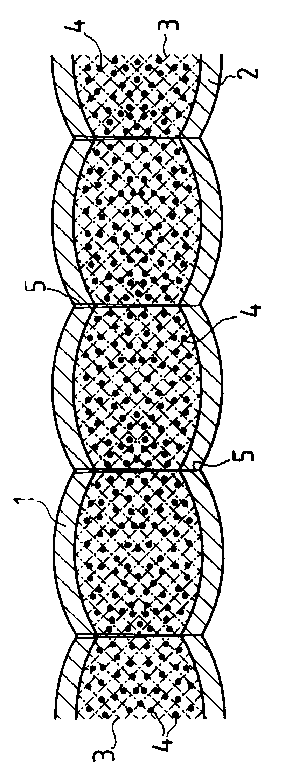

Weitere Einzelheiten, Merkmale und Vorteile der Erfindung lassen sich dem nachfolgenden Beschreibungsteil entnehmen, in dem anhand der Zeichnung ein Ausführungsbeispiel der Erfindung näher erläutert wird. Sie zeigt in schematischer Darstellung eine Dichtungsmatte erfindungsgemäßer Art im Querschnitt.

Der Aufbau der Dichtungsmatte ist nach Art eines Sandwiches und besteht demnach aus insgesamt zwei, jeweils außen befindlichen Schichten (1, 2), die entsprechend ihrem Aufbau von der Art eines Vlieses oder Gewirkes sind. Dazwischen ist ein Aerovlies (3) an den Schichten (1, 2) beidseitig flächig anliegend eingebracht. Es weist entsprechend der Definition einen hohen Porenanteil auf, in die zum Teil die Pulverpartikel (4) des mineralischen Dichtungsmaterials eingebettet sind, mit der Folge, daß die Pulverpartikel (4) auf Abstand gehalten werden und sich nicht zu einer gallertartigen Masse verbinden können.

Die beiden Schichten (1, 2) und das Aerovlies (3) sind durch eine Naht (5) zur sandwichartig aufgebauten Dichtungsmatte zusammengefügt.

Im Ergebnis erhält man eine Dichtungsmatte, bei der eine Relativbewegung der beiden äußeren durch Vliese oder Gewirke gebildeten Schichten (1, 2) relativ gegeneinander unterbunden wird.

## Patentansprüche

1. Dichtungsmatte für den Einsatz im Tiefbau zur Isolation von Erdreich gegen Flüssigkeiten, insbesondere Wasser, mit zwei äußeren, aus Fasermaterial bestehenden Schichten, zwischen die ein Pulver aus mineralischem Dichtungsmaterial, z.B. Bentonit, eingebracht ist, sowie die beiden Schichten miteinander in Verbindung stehen, **dadurch gekennzeichnet**, daß zwischen den beiden Schichten (1, 2) ein Aerovlies (3) eingebracht ist, in welches das Pulver (4) aus mineralischem Dichtungsmaterial eingelagert ist, sowie die beiden Schichten (1, 2) mit dem dazwischen befindlichen Aerovlies (3) miteinander vernäht sind.

2. Dichtungsmatte nach Anspruch 1, **dadurch gekennzeichnet**, daß die äußere Schicht (1, 2) ein Gewirke ist.

3. Dichtungsmatte nach Anspruch 1 oder 2, **dadurch gekennzeichnet**, daß der Nähfaden an beiden Schichten (1, 2) von außen her anliegt.

4. Dichtungsmatte nach einem der Ansprüche 1 bis 3, **dadurch gekennzeichnet**, daß die Stichlänge der Naht etwa der Dicke der Schicht aus mineralischem Dichtungsmaterial im trockenen Zustand entspricht.

5. Dichtungsmatte nach einem der Ansprüche 1 bis 4, **dadurch gekennzeichnet**, daß der Abstand benachbarter Nähzeilen etwa dem drei- bis fünffachen der Stichlänge der Naht (5) gewählt ist.

6. Dichtungsmatte nach einem der Ansprüche 1 bis 6, **dadurch gekennzeichnet**, daß eine der beiden Schichten (1, 2) mit einer großen Porenweite versehen ist und nach außen zu mit einer Dichtungsfolie aus wasserlöslichem Material versehen ist.

## Claims

1. Sealing mat for use in civil and underground engineering for the insulation of soil against liquids, especially water, having two outer layers consisting of a fibrous material, between which is placed a powder of mineral sealing material, e.g. bentonite, as well as the two layers are connected with each other, wherein between said two layers (1, 2) an aero-fleece is placed, in which said powder (4) of mineral sealing material is stored, and the said two layers (1, 2) are sewn to each other with said aero-fleece located in between.

2. Sealing mat according to claim 1, wherein said outer layer (1, 2) is a knitted fabric.

3. Sealing mat according to claim 1 or 2, wherein the sewing thread lies against both layers (1, 2) from outside.

4. Sealing mat according to one of claims 1 to 3, wherein the stitch length of the seam corresponds more or less to the thickness of the layer of mineral sealing material in a dry condition.

5. Sealing mat according to one of claims 1 to 4, wherein the distance between neighbouring sewing lines is chosen more or less three to five times greater than the stitch length of said seam (5).

6. Sealing mat according to one claims 1 to 5, wherein one of the two layers (1, 2) is provided with a large pore width and outward is provided with a sealing foil comprising a water-soluble material.

## Revendications

1. Tapis d'étanchéité destiné à assurer dans le génie civil une fonction d'isolation du sol contre des liquides, en particulier l'eau, comportant deux feuilles extérieures en matériau à fibres, entre lesquelles est placée une poudre d'un matériau imperméable minéral, par exemple la bentonite, les deux feuilles étant reliées l'une avec l'autre, **caractérisé en ce que** l'on dispose entre les deux feuilles (1, 2) un non-tissé à air (3), dans lequel la poudre (4) de matériau isolant minéral est emmagasinée et en ce que les deux feuilles (1, 2) avec le non-tissé à air (3) qui se trouve entre elles sont cousus ensemble.

2. Tapis d'étanchéité selon la revendication 1, **caractérisé en ce que** les feuilles extérieures (1, 2) sont un tissu à mailles.

3. Tapis d'étanchéité selon la revendication 1 ou 2, **caractérisé en ce que** le fil de couture est appliqué à l'extérieur des deux feuilles (1, 2).

4. Tapis d'étanchéité selon l'une des revendications 1 à 3, **caractérisé en ce que** la longueur du point de couture correspond environ à l'épaisseur de la couche de matériau isolant minéral lorsqu'il est sec.

5. Tapis d'étanchéité selon l'une des revendications 1 à 4, **caractérisé en ce que** l'on choisit comme espacement entre des lignes de couture voisines une valeur de l'ordre d'environ trois à cinq fois la longueur d'un point de la couture.

6. Tapis d'étanchéité selon l'une des revendications 1 à 5, **caractérisé en ce que** l'une des deux feuilles (1, 2) présente une grosse largeur de pore et est pourvue vers l'extérieur d'un film isolant en un matériau soluble à l'eau.
